# EUROPEAN PATENT SPECIFICATION

(11) **EP 1 195 639 B1**
(45) Date of publication and mention of the grant of the patent: **17.09.2003**
(21) Application number: 01303337.8
(22) Date of filing: 09.04.2001
(51) Int. Cl.: G02F 2/00

(54) **Optical wavelength converter**
Optischer Wellenlängenkonverter
Convertisseur optique de longueurs d'onde

(30) Priority: 26.09.2000 US 669745
(43) Date of publication of application: 10.04.2002
(73) Proprietor: LUCENT TECHNOLOGIES INC., Murray Hill, New Jersey 07974-0636 (US)
(72) Inventor: Joyner, Charles H., Red Bank, New Jersey 07701 (US); Pleumeekers, Jacco Leonard, Morganville, New Jersey 07751 (US)
(74) Representative: Watts, Christopher Malcolm Kelway, Dr.

(56) References cited:
- US-A- 5 673 140
- MA B ET AL: "REALIZATION OF ALL-OPTICAL WAVELEGTH CONVERTER BASED ON DIRECTIONALLY COUPLED SEMICONDUCTOR OPTICAL AMPLIFIERS" IEEE PHOTONICS TECHNOLOGY LETTERS, IEEE INC. NEW YORK, US, vol. 11, no. 2, February 1999 (1999-02), pages 188-190, XP000803424 ISSN: 1041-1135

## Description

### FIELD OF THE INVENTION

The present invention relates to optical communications, generally, and more particularly to an optical wavelength converter.

### BACKGROUND OF THE INVENTION

Dense wavelength division multiplexing ("DWDM") systems provide numerous wavelength channels for transmitting optical signals over short haul and long haul applications. DWDM systems use wavelength converters to rearrange and reallocate wavelength channels for the efficient use of limited optical bandwidth spectra. Wavelength converters are increasingly necessary for converting optical signals between the 1300 nanometer wavelength band (short haul applications) and the 1500 nanometer wavelength band (long haul applications).

Wavelength converters between the 1300 nm and 1500 nm bands have historically used an optical-electrical-optical ("OEO") design. Converting an optical data signal to an electrical representation, and back into an optical scheme, however, has posed limitations on data transmission rates. OEO wavelength based systems for 1300 nm and 1500 nm conversion have been approximately 620 MB/s. As a result, considerable research has been expended on developing optical networks having fewer electrical components to increase the data transmission rates to greater than 2.5 GB/s.

These efforts have led to the development of optical-optical ("OO") wavelength converters. Barnsley and Fiddyment, in IEEE Photonics Technology Letters, Vol. 3, No. 3, March 1991 (hereinafter "Barnsley"), disclose an OO wavelength converter employing a semiconductor optical amplifier ("SOA") configuration for amplifying optical power in the 1500 nm band. Barnsley proposes modulating an amplified continuous wave ("cw") 1500 nm band signal by the binary value of each bit of a data stream in a 1300 nm band. As a result, a data stream in 1500 nm band is created. However, by amplifying the 1500 nm band cw signal in forming the 1500 nm band data stream, the SOA configuration also creates amplified spontaneous emission in the 1500 nm band. Thus, Barnsley's OO converter creates undesirable noise in the same wavelength as the converted 1500 nm band data stream.

An alternative OO converter has been put forth by Lacey et al., in IEEE Photonics Technology Letters, Vol. 8, No. 7, July 1996 (hereinafter "Lacey"). Lacey proposes using a Mach-Zehnder interferometer ("MZI") having two waveguide branches, each of which receives a 1500 nm band cw optical signal. In one of the branches, a data stream in the 1300 nm band induces a relative phase shift of approximately 180 degrees in a 1300 nm band SOA. The relative phase shift between the branches, when present, causes destructive interference to reduce the signal amplitude at the output of the MZI. As a consequence, the data stream output by the MZI in the 1500 nm band corresponds with the complement of each bit of a data stream in the 1300 nm band. The OO converter of Lacey, consequently, is dependent on creating a phase shift of exactly 180 degrees. Unfortunately, as a relationship exists between the input power of the 1300 nm data signal and the phase shift created by the SOA, Lacey's OO converter is extremely sensitive to input power.

As such, a demand exists for an OO wavelength converter for converting optical data between a 1300 nm wavelength and a 1500 nm wavelength without amplified spontaneous emission noise. There also exists a demand for an OO wavelength converter for converting optical data between a 1300 nm wavelength and a 1500 nm wavelength which is less sensitive to input signal.

Ma et al., in IEEE Photonics Technology Letters, vol. 11, no. [2], February 1999, pages 188-190, '*Realization of all-optical wavelength converter based on directionally coupled semiconductor optical amplifiers*', describe an optical-to-optical wavelength converter for converting an optical data signal from a first wavelength in the 1500 nm wavelength band to a second wavelength in the 1500 nm wavelength band and comprising a directional coupler having a first waveguide for receiving an optical data signal at a first wavelength in the 1500 nm wavelength band (1.554 µm in the example) and a second waveguide for receiving a continuous wave optical signal at a second wavelength in the 1500 nm wavelength band (1.549 µm in the example). The continuous wave optical signal is coupled from the second waveguide to the first waveguide in response to a binary zero in the original optical data signal, while the continuous wave optical signal continues to propagate through the second waveguide in response to a binary one in the original optical data signal.

### Summary of the Invention

An optical-to-optical wavelength converter according to the invention is as set out in claim 1. Preferred forms of the invention are set out in the dependent claims.

### SUMMARY OF THE INVENTION

We have invented an OO wavelength converter using a directional coupler for converting optical data from a first wavelength band to a second wavelength band.

In an embodiment of the present invention, an OO wavelength converter is disclosed for converting a plurality of optical bits from a 1300 nm wavelength band to a 1500 nm wavelength band. The OO wavelength converter employs a directional coupler having at least one optical element, such as an SOA, for changing its refractive index in response to receiving optical power within the 1300 nm wavelength band. The SOA causes a continuous wave ("cw") signal in the 1500 nm wavelength band to couple with an output port if a bit of the plurality of optical bits is a binary one. As a result, an optical signal propagating through the output port operates in the second wavelength and corresponds in binary value with the plurality of optical bits in 1300 nm wavelength band.

These and other embodiments, advantages and objects will become apparent to skilled artisans from the following detailed description read in conjunction with the appended claims and the drawings attached hereto.

### BRIEF DESCRIPTION OF THE DRAWINGS

The present invention will be better understood from reading the following description of non-limiting embodiments, with reference to the attached drawings, wherein below:
**FIG. 1** illustrates a first embodiment of the present invention; and
**FIG. 2** illustrates a second embodiment of the present invention.

### DETAILED DESCRIPTION OF THE PRESENT INVENTION

The OO wavelength converter of the present invention converts data between a first wavelength band and a second wavelength band. In an embodiment, the OO wavelength converter converts a plurality of optical data bits at a wavelength in the 1300 nm band to a plurality of optical data bits at a wavelength in the 1500 nm band. However, it should be apparent to skilled artisans upon reviewing the present disclosure that other wavelength bands may be employed.

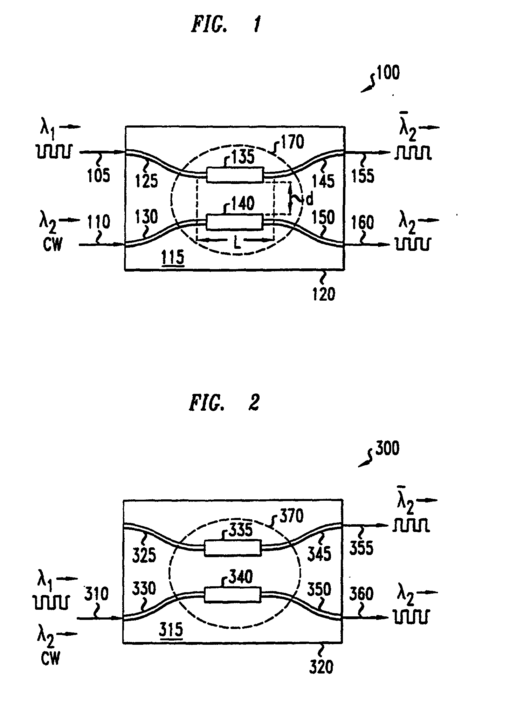

Referring to **FIG. 1,** an OO wavelength converter **100** is illustrated according to a first embodiment of the present invention. Wavelength converter **100** comprises a directional coupler **120.** Directional coupler **120** includes a first input waveguide, **125,** for receiving a plurality of optical data bits from a first input port **105.** The plurality of optical bits operates within a first wavelength band. Directional coupler **120** also employs a second input waveguide, **130,** for receiving a continuous wave ("cw") optical signal operating within a second wavelength band from a second input port **110.** In one embodiment, each bit of the plurality has a first wavelength, λ₁, of 1310 nm, while the cw signal has a second wavelength, λ₂, of 1550 nm.

Coupled with first input waveguide **125** are a first semiconductor optical amplifier ("SOA") **135** and a first output waveguide **145.** SOA 135 is designed to have its refractive index, ***n***_{***1***}***,*** change in response to receiving optical power within the first wavelength band. SOA **135** is forward biased and powered by a current source (not shown) to enable operation within its saturation region.

Likewise, second waveguide **130** is coupled with a second semiconductor optical amplifier ("SOA") **140** and a second output waveguide **150.** SOA **140** has a refractive index, ***n***_{***2***}***.*** Refractive index, ***n***_{***2***}**,** is substantially equal to refractive index, ***n***_{***1***}**,** in the absence of optical power within the first wavelength band. SOA **140** is forward biased and powered by a current source (not shown) to enable operation within its saturation region.

It should be noted that waveguides, **125, 130, 145** and **150,** are described in the present disclosure as individual element waveguides coupled together. However, first input and output waveguides, **125** and **145**, may be formed as a singular waveguide, and manufactured as such. Similarly, second input and output waveguides, **130** and **150**, may be manufactured as a single waveguide. In one embodiment, directional coupler **120**, waveguides **125**, **130, 145** and **150**, as well as SOAs **135** and **140**, form an integrated-optical component on a single substrate **115**.

Operationally, directional coupler **120** utilizes a coupling effect, as will be described in detail hereinbelow, to direct the cw signal between first and second output waveguides, **145** and **150**, in response to the binary value of each bit of the plurality of optical data bits in the first wavelength band. By this arrangement, an optical signal at the wavelength of the cw signal corresponding with the binary values of the plurality of optical data bits propagates through second output waveguide **150.** Similarly, an optical signal at the wavelength of the cw signal corresponding with the complement of the binary values of the plurality of optical data bits propagates through first output waveguide **145.**

More specifically, if the binary value of a bit of the plurality of optical data bits is a zero, directional coupler **120** directs the cw signal from second input waveguide **130** through first output waveguide **145.** In this circumstance, directional coupler **120** is balanced. In a balanced state, the refractive indexes, ***n***_{***1***} and ***n***_{***2***}***,*** are substantially equivalent. As a result, directional coupler **120** enables the cw signal to cross over from second input waveguide **130** to first output waveguide **145** by way of a coupling effect, as discussed in greater detail hereinbelow.

If, on the other hand, the binary value of a bit of the plurality of optical data bits is a one, directional coupler **120** directs the cw signal from second input waveguide **130** through second output waveguide **150.** In this circumstance, the refractive index, ***n***_{***1***}**,** of SOA **135** changes in response to the optical power within the first wavelength band, relative to the refractive index, ***n***_{***2***}**,** of SOA **140.** As refractive indexes, ***n***_{***1***} and ***n***_{***2***}**,** are no longer equal to each other, the directional coupler **120** is switched into an unbalanced state. Once unbalanced, the coupling effect is substantially minimized and directional coupler **120** enables the cw signal to propagate from second input waveguide **130** to second output waveguide **150.**

As noted above, directional coupler **120** relies on the coupling effect. The coupling effect is a known phenomenon wherein two waveguides are positioned in sufficiently close proximity to one another such that their fields may overlap, enabling an optical signal to couple from one waveguide to the other waveguide. Directional couplers, which may promote the coupling effect, are commercially available. For more information on directional couplers, generally, and the coupling effect, more specifically, *see* Saleh and Teich, "The Fundamentals of Photonics," Wiley and Sons 1991, *and* Tamir, "Integrated Optics," (2^{nd} Edition) Springer-Verlag 1979.

To realize the coupling effect, directional coupler **120** has a coupling region **170.** Coupling region **170** comprises SOAs **135** and **140,** as well as end portions of waveguides **125, 130, 145** and **150.** Coupling region **170** is designed to facilitate the coupling effect in response to the binary values of incoming plurality of optical bits from input waveguide **125.** If the binary value of a bit from the plurality within the first wavelength band is a zero, the refractive indexes, ***n***_{***1***} and ***n***_{***2***}, of SOAs **135** and **140** are substantially equal to one another. Given these conditions and the particular design of the coupling region, as will be detailed hereinbelow, the coupling effect causes the cw signal to propagating from second input waveguide **130** to first output waveguide **145.**

The effective transfer of the cw signal from second input waveguide **130** to first output waveguide **145** is a function of the design parameters of coupling region **170.** Coupling region **170** has a gap, ***d***, defined as the proximate distance separating the pair of waveguides to enable their potential fields to overlap. Moreover, coupling region **170** has a length, ***L,*** defined as the distance in which the pair of waveguides is spaced by the gap, ***d*.** The gap, ***d*,** and length, ***L,*** are selected to enable a particular result - namely, the coupling of an optical signal within a particular wavelength band from one waveguide to the other waveguide. It should be noted that the coupling effect might also cause optical signals outside the desired wavelength band to transfer between waveguides. Consequently, gap, ***d*,** and length, ***L***, are selected to optimally couple optical power in the 1500 nm band between the pair of waveguides, while substantially minimizing the effective transfer of optical signals outside the desired wavelength band.

It should be apparent to skilled artisans from the above that directional coupler **120** directs the cw signal to one of the output waveguides, **145** or **150,** in response to the binary value of each of the incoming plurality of bits. Consequently, a binary one propagates through the output waveguide receiving the directed cw signal, while a binary zero propagates through output waveguide not receiving the directed cw signal. By the above configuration, therefore, a plurality of optical bits in the wavelength band of the cw signal may propagate through second output waveguide **150,** and an output port **160.** The plurality of optical bits at output port **160** correspond with the binary values of the plurality of optical bits received by input port **105.** Similarly, a plurality of optical bits in the wavelength band of the cw signal propagates through first output waveguide **145,** and a complementary output port **155.** The plurality of optical bits at complementary output port **155,** however, corresponds with the complement of the binary values of the plurality of optical bits received by input port **105.**

Given manufacturing tolerances, it should be noted that the coupling effect may also cause a small percentage of the optical power from the plurality of optical bits within the first wavelength band to couple from first input waveguide **125** to second output waveguide **150.** To filter this first wavelength optical power from the plurality of optical bits in the second wavelength band, an output SOA (not shown) may also be coupled between second output waveguide **150** and output port **160,** and advantageously formed on substrate **115.** The output SOA is designed to absorb and, therefore, attenuate light within the first wavelength band. This output SOA may also be designed to amplify optical power in the second wavelength to increase the signal power of the plurality of optical bits propagating through output port **160** within the second wavelength band.

In another embodiment, an input pre-amplifier SOA (not shown) may also be incorporated between input port **105** and input waveguide **125.** The input pre-amplifier SOA amplifies the plurality of optical bits in the first wavelength band before reaching coupling region **170.** By incorporating the pre-amplifier SOA, scattered stray light and other noise created in coupling the plurality of optical bits in the first wavelength band into port **105** may be substantially reduced. Further, a low power optical signal to be wavelength converted may be employed in the present invention - for example, a plurality of optical bits in the first wavelength having a binary one requiring less than 2 mW.

Referring to **FIG. 2,** an OO wavelength converter **300** is illustrated according to a second embodiment of the present invention. Wavelength converter **300** operates much like converter **100** of **FIG. 1.** However, converter **300** employs one input port **310** for receiving both a plurality of optical bits operating within a first wavelength band and a continuous wave ("cw") optical signal operating within a second wavelength band. As with converter **100** of **FIG. 1,** converter **300** generates a wavelength converted output signal at output port **360,** and a wavelength converted complementary output signal at output port **355.** By receiving the plurality of optical bits and the cw signal through one input port **310,** the packaging of converter **300** may be simplified.

Wavelength converter **300** is designed similarly to converter **100** of **FIG. 1.** Converter **300** comprises a directional coupler **320** having an input waveguide **330** for receiving the plurality of optical bits and the cw signal from input port **310**. Coupled with input waveguide **330** are a first SOA **340** and a first output waveguide **350**. SOA **340** has a refractive index, ***n***_{***1***}, which changes in response to receiving optical power within the first wavelength band.

Directional coupler **320** also comprises an optical element **335**. Optical element **335** has a refractive index, ***n***_{***2***}, which does not change in the presence of optical power in the second wavelength band. Optical element **335** may be realized by various suitable components known to skilled artisans, including an SOA. Coupled with optical element **335** are second output waveguide **345** and output port **355**.

Directional coupler **320** directs the cw signal between first and second output waveguides, **350** and **345**, in response to the binary values of each bit of the plurality of optical data bits. By this arrangement, an optical signal at the wavelength of the cw signal corresponding with the binary values of the plurality of optical data bits propagates through first output waveguide **350.** Similarly, the compliment of the optical signal at the wavelength of the cw signal propagates through second output waveguide **345.**

Directional coupler **320** comprises a coupling region **370.** Coupling region **370** facilitates the coupling effect in response to values of incoming plurality of optical bits from input waveguide **330.** Coupling region **370** comprises SOA **340,** optical element **335,** and the end portions of waveguides **325, 330, 345** and **350.**

Operationally, if the binary value of a bit from the plurality within the first wavelength band is a zero, the respective refractive indexes, ***n***_{***1***} and ***n***_{***2***}**,** of SOA **340** and optical element **335** are designed to be substantially equal to one another. Consequently, the coupling effect causes the cw signal to propagate from first input waveguide **330** to second output waveguide **345.** On the other hand, if the binary value of a bit from the plurality within the first wavelength band is a one, the refractive index, ***n***_{***1***}**,** of SOA **340** changes relative to the refractive index, ***n***_{***2***}, of optical element **335**. Consequently, refractive indexes, ***n***_{***1***} and ***n***_{***2***}, are no longer equal to one another, causing the cw signal to propagate from first input waveguide **330** to first output waveguide **350**.

It should be noted that wavelength converters **100** and **300** each may also convert a plurality of optical bits from a first wavelength to multiple other wavelengths. Here, a number of cw signals, each having a different wavelength within the second wavelength band, are fed into an input port of the directional coupler. The directional coupler directs each cw signal in a similar fashion as detailed herein. Consequently, the output port presents the plurality of optical bits at the wavelengths of each cw signal.

The directional coupler of the present invention may be fabricated using InP based semiconductor processing techniques. These fabrication steps include growing semiconductor layers over an InP substrate. The grown semiconductor layers are patterned, etched and regrown. Metals are thereafter deposited to form contacts. In one embodiment of the present invention, the directional coupler has a pair of active waveguide layers formed above the InP based substrate. The active waveguide layers comprise GaInAsP. Each GaInAsP layer is surrounded by a cladding layer of InP. It should be noted that the materials, dimensions and parameters disclosed herein are merely exemplary in nature, and may be modified in view of the herein disclosure to achieve the benefits of the present invention.

In an exemplary embodiment of the present invention, the directional coupler is 3 mm long. Each active waveguide layer has a width of 1.0 µm, and a thickness 0.2 µm. Moreover, the directional coupler has a coupling region wherein both active waveguide layers control the direction of the continuous wave signal. The coupling region has a gap, ***d*,** of 2.0 µm between both active waveguide layers and a length, ***L***, of 600µm, to effectuate a coupling effect between waveguides within the coupling region. The cladding portion, InP, of each waveguide has a refractive index of is 3.166 in the presence of 1550 nm wavelength light, and 3.203 in the presence of 1310 nm wavelength light. Likewise, the refractive index of active portion, GaInAsP, of each waveguide layer is 3.43 in the presence of 1550 nm wavelength light, and 3.53 in the presence of 1310 nm wavelength light.

In accordance with the exemplary embodiment, the active regions of either waveguide should provide negligible loss to the continuous wave optical signal at 1550 nm. However, coupling losses in coupling the continuous wave optical signal into the directional coupler, as well as scattering losses attributable to shape of the waveguides of the directional coupler are estimated to be in the approximate range of 10 to 16 decibels ("db"). Given these losses, the input power of the continuous wave optical signal may be selected in the approximate range of 1 mW to 10 mW.

In contrast, the optical power associated with the input data stream at 1310 nm must initiate the switching behavior detailed herein. The power required to effectuate this switching is dependent on several parameters including the coupling loss in coupling the data signal into the directional coupler, polarization loss, coupling constant within the directional coupler, as well as heat dissipation. In the present configuration, estimated operable parameters for determining the power of the input data stream include a coupling loss of less than -6 db, a polarization dependent loss of -2 db, and heat dissipation in the range of 0.3 W to 1.5 W. Typically, the input data stream will switch between o mW for a binary zero, and 10 mW for a binary one.

Given the above estimated operable parameters, it is assumed that the ratio of the power of a binary one and a binary zero - also referred to as extinction ratio - will be approximately 100. To maximize the extinction ratio, each of the fabricated SOAs operates at saturation - for example, a bias current of 100 mA, and bias voltage of 1.5V. By this arrangement, it is estimated that the present invention will yield an extinction ratio of approximately 20 decibels at a data transmission rate of 10 GB/s.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to skilled artisans upon reference to this description without departing from the invention, as recited in the claims appended hereto. Thus, while the disclosure herein details a pair of SOAs control the direction of a continuous wave signal through a directional coupler, similar functional devices may be employed to achieve the same result. Likewise, while use of a pair of semiconductor optical amplifiers is disclosed, it should be apparent to skilled artisans that one SOA may also be employed in conjunction with the present invention to realize the same result of the present invention. It should also be apparent to skilled artisans the directional coupler may be alternatively designed to switch from an unbalanced state to a balanced state upon receiving optical power in the first wavelength band.

## Claims

1. An optical-to-optical wavelength converter comprising:
a directional coupler (120, 320) adapted to convert a plurality of optical bits at a first wavelength (λ₁) to a second wavelength (λ₂), **characterized in that** the first wavelength is in a 1300 nm band and the second wavelength is in a 1500 nm band;
the directional coupler comprising:
at least one optical element (135, 335) having an index of refraction which changes in response to optical power in the 1300 nm band;
and a coupling region (170, 370) selected to optically couple power in the 1500nm band while substantially minimising the effective transfer of optical signals outside the 1500nm band.

2. The optical-to-optical wavelength converter of claim 1, wherein the directional coupler comprises a pair of semiconductor optical amplifiers (135, 140; 335, 340) having refractive indices, *n*_{*1*} and *n*_{*2*} respectively, *n*_{*1*} changing in response to receiving optical power within the 1300nm band and *n*_{*2*} substantially equal to *n*_{*1*} in the absence of optical power within the 1300nm band.

3. The optical-to-optical wavelength converter of claim 1, wherein the directional coupler propagates at least one continuous wave signal (CW) in the 1500 nm band through an output port (160, 360) if a bit of the plurality is equal to a first value.

4. The optical-to-optical wavelength converter of claim 3, wherein the at least one optical element comprises at least one semiconductor optical amplifier for directing the continuous wave signal to the output port if a bit of the plurality of optical bits is equal to the first value, and the at least one semiconductor optical amplifier directs the continuous wave signal to a complementary output port (155, 355) if the bit is equal to a second value.

5. The optical-to-optical wavelength converter of claim 4, wherein the directional coupler comprises:
at least one waveguide (330) for receiving the plurality of optical bits in the 1300 nm band and the continuous wave signal in the 1500 nm band; and
a coupling region (370) for coupling the continuous wave signal from the at least one waveguide (330) to the output port (360) if the bit of the plurality is equal to the first value, and for coupling the continuous wave signal from the at least one waveguide to the complementary output port if the bit of the plurality is equal to the second value, such that optical power propagating in the second wavelength through the output port corresponds with the bit values of the plurality of optical bits in the first wavelength band.

6. The optical-to-optical wavelength converter of claim 4, further comprising:
a first waveguide (125) for receiving the plurality of optical bits in the 1300 nm band; and
a second waveguide (130) for receiving the continuous wave signal in the 1500 nm band.

7. The optical-to-optical wavelength converter of claim 5, wherein the directional coupler is balanced if the bit of the plurality is a binary one such that the continuous wave signal couples to the complementary output port, and the directional coupler is unbalanced if the bit of the plurality is a binary zero such that the continuous wave signal propagates to the output port.

8. The optical-to-optical wavelength converter of claim 7, wherein the directional coupler is unbalanced by a change in the refractive index.

9. The optical-to-optical wavelength converter of claim 5, further comprising:
a combiner for combining the plurality of optical bits in the 1300 nm band with the continuous wave signal, the combiner being coupled with the at least one waveguide.

10. The optical-to-optical wavelength converter of claim 5, further comprising an output semiconductor optical amplifier for attenuating the plurality of optical bits in the first wavelength band propagating through the output port.

## Patentansprüche

1. Optisch-optischer Wellenlängenumsetzer, der folgendes umfaßt:
einen Richtkoppler (120, 320), der dafür ausgelegt ist, mehrere optische Bit einer ersten Wellenlänge (λ₁) in eine zweite Wellenlänge (λ₂) umzusetzen, **dadurch gekennzeichnet, daß** die erste Wellenlänge in einem 1300 nm Band liegt und die zweite Wellenlänge in einem 1500 nm Band liegt;
wobei der Richtkoppler folgendes umfaßt:
mindestens ein optisches Element (135, 335) mit einem Brechungsindex, der sich als Reaktion auf optische Leistung im 1300 nm Band ändert;
und ein Kopplungsgebiet (170, 370), das so ausgewählt ist, daß es Leistung optisch im 1500 nm Band koppelt und gleichzeitig die effektive Übertragung optischer Signale außerhalb des 1500 nm Bands minimiert.

2. Optisch-optischer Wellenlängenumsetzer nach Anspruch 1, wobei der Richtkoppler ein Paar optischer Halbleiterverstärker (135, 140; 335, 340) mit Brechungsindizes *n*_{*1*} bzw. *n*_{*2*} umfaßt, wobei sich *n*_{*1*} als Reaktion auf den Empfang optischer Leistung im 1300 nm Band ändert und bei Fehlen von optischer Leistung im 1300 nm Band im wesentlichen *n*_{*2*} gleich *n*_{*1*} ist.

3. Optisch-optischer Wellenlängenumsetzer nach Anspruch 1, wobei der Richtkoppler mindestens ein Dauerstrichsignal im 1500 nm Band durch einen Ausgangsport (160, 360) überträgt, falls ein Bit der mehreren gleich einem ersten Wert ist.

4. Optisch-optischer Wellenlängenumsetzer nach Anspruch 3, wobei das mindestens eine optische Element mindestens einen optischen Halbleiterverstärker umfaßt, um das Dauerstrichsignal zum Ausgangsport zu lenken, falls ein Bit der mehreren optischen Bits gleich dem ersten Wert ist, und der mindestens eine optische Halbleiterverstärker das Dauerstrichsignal zu einem komplementären Ausgangsport (155, 355) lenkt, falls das Bit gleich einem zweiten Wert ist.

5. Optisch-optischer Wellenlängenumsetzer nach Anspruch 4, wobei der Richtkoppler folgendes umfaßt:
mindestens einen Wellenleiter (330) zum Empfangen der mehreren optischen Bits im 1300 nm Band und des Dauerstrichsignals im 1500 nm Band; und
ein Kopplungsgebiet (370) zum Koppeln des Dauerstrichsignals aus dem mindestens einen Wellenleiter (330) zu dem Ausgangsport (360), falls das Bit der mehreren gleich dem ersten Wert ist, und zum Koppeln des Dauerstrichsignals aus dem mindestens einen Wellenleiter zu dem komplementären Ausgangsport, falls das Bit der mehreren gleich dem zweiten Wert ist, so daß die sich mit der zweiten Wellenlänge durch den Ausgangsport ausbreitende optische Leistung den Bitwerten der mehreren optischen Bits im ersten Wellenlängenband entspricht.

6. Optisch-optischer Wellenlängenumsetzer nach Anspruch 4, der weiterhin folgendes umfaßt:
einen ersten Wellenleiter (125) zum Empfangen der mehreren optischen Bits im 1300 nm Band und
einen zweiten Wellenleiter (130) zum Empfangen des Dauerstrichsignals im 1500 nm Band.

7. Optisch-optischer Wellenlängenumsetzer nach Anspruch 5, wobei der Richtkoppler ausgeglichen ist, falls das Bit der mehreren eine binäre Eins ist, so daß das Dauerstrichsignal zum komplementären Ausgangsport gekoppelt wird, und der Richtkoppler unausgeglichen ist, falls das Bit der mehreren eine binäre Null ist, so daß das Dauerstrichsignal zum Ausgangsport übertragen wird.

8. Optisch-optischer Wellenlängenumsetzer nach Anspruch 7, wobei der Richtkoppler durch eine Änderung des Brechungsindexes unausgeglichen wird.

9. Optisch-optischer Wellenlängenumsetzer nach Anspruch 5, der weiterhin folgendes umfaßt:
einen Kombinierer zum Kombinieren der mehreren optischen Bits im 1300 nm Band mit dem Dauerstrichsignal, wobei der Kombinierer mit dem mindestens einen Wellenleiter gekoppelt ist.

10. Optisch-optischer Wellenlängenumsetzer nach Anspruch 5, weiterhin mit einem optischen Halbleiterausgangsverstärker zum Dämpfen der mehreren optischen Bits in dem durch den Ausgangsport übertragenen ersten Wellenlängenband.

## Revendications

1. Convertisseur de longueur d'onde optique-optique comprenant :
un coupleur directif (120, 320) adapté pour convertir une pluralité de bits optiques d'une première longueur d'onde (λ₁) en une deuxième longueur d'onde (λ₂), **caractérisé en ce que** la première longueur d'onde se situe dans une bande de 1300 nm et la deuxième longueur d'onde se situe dans une bande de 1500 nm ;
le coupleur directif comprenant :
au moins un élément optique (135, 335) ayant un indice de réfraction qui change en réponse à la puissance optique dans la bande de 1300 nm ;
et une région de couplage (170, 370) sélectionnée pour coupler optiquement la puissance dans la bande de 1500 nm tout en minimisant substantiellement le transfert effectif de signaux optiques en dehors de la bande de 1500 nm.

2. Convertisseur de longueur d'onde optique-optique selon la revendication 1, dans lequel le coupleur directif comprend une paire d'amplificateurs optiques à semi-conducteur (135, 140 ; 335, 340) ayant des indices de réfraction, *n*_{*1*} et *n*_{*2*} respectivement, *n*_{*1*} changeant en réponse à la réception d'une puissance optique dans la bande de 1300 nm et *n*_{*2*} étant substantiellement égal à *n*₁ en l'absence de puissance optique dans la bande de 1300 nm.

3. Convertisseur de longueur d'onde optique-optique selon la revendication 1, dans lequel le coupleur directif propage au moins un signal d'ondes entretenues (CW) dans la bande de 1500 nm par le biais d'un port de sortie (160, 360) si un bit de la pluralité est égal à une première valeur.

4. Convertisseur de longueur d'onde optique-optique selon la revendication 3, dans lequel l'au moins un élément optique comprend au moins un amplificateur optique à semi-conducteur pour diriger le signal d'ondes entretenues vers le port de sortie si un bit de la pluralité de bits optiques est égal à la première valeur, et l'au moins un amplificateur optique à semi-conducteur dirige le signal d'ondes entretenues vers un port de sortie complémentaire (155, 355) si le bit est égal à une deuxième valeur.

5. Convertisseur de longueur d'onde optique-optique selon la revendication 4, dans lequel le coupleur directif comprend :
au moins un guide d'onde (330) pour recevoir la pluralité de bits optiques dans la bande de 1300 nm et le signal d'ondes entretenues dans la bande de 1500 nm ; et
une région de couplage (370) pour coupler le signal d'ondes entretenues provenant de l'au moins un guide d'onde (330) au port de sortie (360) si le bit de la pluralité est égal à la première valeur, et pour coupler le signal d'ondes entretenues provenant de l'au moins un guide d'onde au port de sortie complémentaire si le bit de la pluralité est égal à la deuxième valeur, de telle sorte que la puissance optique se propageant dans la deuxième longueur d'onde par le biais du port de sortie corresponde aux valeurs binaires de la pluralité de bits optiques dans la première bande de longueurs d'onde.

6. Convertisseur de longueur d'onde optique-optique selon la revendication 4, comprenant en outre :
un premier guide d'onde (125) pour recevoir la pluralité de bits optiques dans la bande de 1300 nm ; et
un deuxième guide d'onde (130) pour recevoir le signal d'ondes entretenues dans la bande de 1500 nm.

7. Convertisseur de longueur d'onde optique-optique selon la revendication 5, dans lequel le coupleur directif est équilibré si le bit de la pluralité est un un binaire de telle sorte que le signal d'ondes entretenues se couple au port de sortie complémentaire, et le coupleur directif est non équilibré si le bit de la pluralité est un zéro binaire de telle sorte que le signal d'ondes entretenues se propage vers le port de sortie.

8. Convertisseur de longueur d'onde optique-optique selon la revendication 7, dans lequel le coupleur directif est déséquilibré par un changement de l'indice de réfraction.

9. Convertisseur de longueur d'onde optique-optique selon la revendication 5, comprenant en outre :
un circuit de combinaison pour combiner la pluralité de bits optiques dans la bande de 1300 nm au signal d'ondes entretenues, le circuit de combinaison étant couplé à l'au moins un guide d'onde.

10. Convertisseur de longueur d'onde optique-optique selon la revendication 5, comprenant en outre un amplificateur optique à semi-conducteur de sortie pour atténuer la pluralité de bits optiques dans la première bande de longueurs d'onde se propageant par le biais du port de sortie.
